Europäisches Patentamt

European Patent Office

Office européen des brevets

(19)

(11) Veröffentlichungsnummer: **0 010 131**
**A1**

## (12) EUROPÄISCHE PATENTANMELDUNG

(21) Anmeldenummer: **79103012.5**

(22) Anmeldetag: **17.08.79**

(51) Int. Cl.³: **B 65 G 35/08**
**B 23 Q 7/14, B 23 P 19/00**

(30) Priorität: **21.10.78 DE 2845978**

(43) Veröffentlichungstag der Anmeldung:
**30.04.80 Patentblatt 80/9**

(84) Benannte Vertragsstaaten:
**AT CH DE FR GB IT**

(71) Anmelder: **ROBERT BOSCH GMBH**
**Postfach 50**
**D-7000 Stuttgart 1(DE)**

(72) Erfinder: **Reger, Herbert**
**Paul Gerhardtstrasse 9**
**D-7120 Bietigheim-Bissingen(DE)**

(72) Erfinder: **Steegmüller, Helmut**
**Im Vogelsang 15**
**D-7151 Affalterbach(DE)**

(54) **Längstransfer-Montagemaschine.**

(57) Längstransfer-Montagemaschine, bei der die einzelnen Werkstückträger-Laufwagen (2) ohne gegenseitige Berührung durch jeweils eine im Vor und Rücklauf angeordnete Steuerwelle (3,4) mit einer Steuernut schrittweise zu den aufeinanderfolgenden Bearbeitungs- oder Montagestationen transportiert und positioniert werden. Die Steuernut hat für den Transport der Laufwagen (2) einen wendelförmigen, für die Positionierung einen radialen Verlauf. Durch diese Steuerung ergibt sich auch bei einfachen Schaltgetrieben eine präzise und gleichbleibende Positionierung. In den beiden Umlenkbereichen kommen die Laufwagen (2) in Anlage und schieben sich gegenseitig von der Vorlauf- auf die Rücklaufstrecke.

./...

Croydon Printing Company Ltd.

Fig. 1

R -

ROBERT BOSCH GMBH, 7000 Stuttgart 1

A n s p r ü c h e
==================

1. Längstransfer-Montagemaschine mit einer in sich geschlossenen Führungsbahn für aufeinanderfolgende Werkstückträger-Laufwagen, mit denen Werkstücke schrittweise zu verschiedenen Bearbeitungs- oder Montagestationen transportierbar sind,

dadurch gekennzeichnet,

daß der Transport und die Positionierung der Laufwagen (2) in den beiden geraden Bereichen der umlaufenden Führung durch jeweils eine in Transportrichtung
verlaufende, drehbare Steuerwelle (3, 4) erfolgt, die
eine umlaufende Steuerkurve (10) aufweist, die im Transportbereich der Laufwagen (2) wendelförmig, im Positionierbereich radial verläuft und die mit je einem
entsprechenden Mitnehmer (9) der Laufwagen (2) in formschlüssigem Eingriff steht.

2. Längstransfer-Montagemaschine nach Anspruch 1, dadurch gekennzeichnet, daß sich der radiale Verlauf der Steuerkurve (10) über einen Umfangsbereich von etwa 30° erstreckt.

3. Längstranfer-Montagemaschine nach Anspruch 1 oder 2, dadurch gekennzeichnet, daß die Steuerkurve eine in die Steuerwelle (3, 4) eingefräste Nut (10) ist.

4. Längstransfer-Montagemaschine nach Anspruch 3, dadurch gekennzeichnet, daß die Nut (10) im Transportbereich entsprechend einer höheren Sinoide verläuft und durch flache Übergänge an die radialen Positionierbereiche angeschlossen ist.

5. Längstransfer-Montagemaschine nach Anspruch 3 oder 4, dadurch gekennzeichnet, daß die Mitnehmer als in die Nut (10) hineinragende Führungsstifte (9) ausgebildet sind.

6. Längstransfer-Montagemaschine nach einem der vorhergehenden Ansprüche, dadurch gekennzeichnet, daß die Steuerwellen (3, 4) unterhalb der Laufwagen (2) angeordnet sind.

7. Längstransfer-Montagemaschine nach Anspruch 5, dadurch gekennzeichnet, daß die Laufwagen (2) L-förmige Gestalt haben, wobei der vertikale Schenkel an seinem unteren Ende den Führungsstift (9) für die Steuerwelle (3, 4) trägt.

8. Längstransfer-Montagemaschine nach einem der vorhergehenden Ansprüche, dadurch gekennzeichnet, daß der Transport der Laufwagen (2) in den Umlenkbereichen der Führungsbahn (1) durch gegenseitigen Schub der einander berührenden Laufwagen (2) erfolgt.

9. Längstransfer-Montagemaschine nach Anspruch 8, dadurch gekennzeichnet, daß die Berührung der Laufwagen (2) in den Umlenkbereichen über die endständigen Laufrollen (2a, 2c) erfolgt, mit denen sie in der Führungsbahn (1) laufen.

10. Längstransfer-Montagemaschine nach einem der vorhergehenden Ansprüche, dadurch gekennzeichnet, daß die Laufwagen (2) an einzelnen Bearbeitungsstationen durch zusätzliche Indexiereinheiten mit erhöhter Genauigkeit positionierbar sind.

11. Längstransfer-Montagemaschine nach einem der vorhergehenden Ansprüche, dadurch gekennzeichnet, daß der Antrieb der beiden Steuerwellen (3, 4) synchron über ein Schrittschaltgetriebe (7) erfolgt.

12. Längstransfer-Montagemaschine nach Anspruch 11, dadurch gekennzeichnet, daß das Schrittschaltgetriebe (7) über eine Schaltkupplung mit einer zentralen Antriebswelle (8) verbunden ist und diese zugleich die Bearbeitungs- oder Montagestationen steuert.

R 5 0 0 0
Ot

ROBERT BOSCH GMBH, 7000 Stuttgart 1

Längstransfer-Montagemaschine

Stand der Technik

Die Erfindung geht aus von einer Längstransfer-Montagemaschine nach der Gattung des Hauptanspruches. Eine
solche Montagemaschine ist beispielsweise durch die
DE-AS 20 31 851 bekannt geworden. Dabei sind die Werkstückträger-Laufwagen auf ihrer in sich geschlossenen
Führungsbahn aneinanderstoßend geführt und stehen unter
einem sie federnd gegeneinander pressenden Vorspanndruck. Dieser Vorspanndruck wird dadurch erzeugt, daß
die Führungsbahn aus zwei gegeneinander gepreßten Bahnteilen zusammengesetzt ist. Dadurch soll sichergestellt
werden, daß zwischen den einzelnen Wagen kein Spiel
vorliegt und die Bewegung des Schrittvorschubantriebes gleichmäßig auf sämtliche Wagen übertragen wird. Allerdings müssen hierfür die Wagen geschliffene Anlageflächen aufweisen und ein sehr genaues Längenmaß einhalten, wodurch ihre Herstellung relativ teuer wird.

Außerdem ist es bekannt, die Wagen unter gegenseitigem Abstand an einem umlaufenden Stahlband zu führen. Damit die Banddehnung zu keiner Änderung der Position der Wagen an den Bearbeitungs- oder Montagestationen führt, muß das Band definiert vorgespannt werden. Außerdem benötigt man ebenso wie bei dem vorbeschriebenen Schubbetrieb der einander berührenden Wagen einen sehr exakt arbeitenden Antrieb für die schrittweise Vorschubbewegung.

Schließlich ist es bei den beiden bekannten Ausführungsformen nachteilig, daß ein Positionieren der Wagen von außen, wie es zur Erhöhung der Grundgenauigkeit bei manchen Bearbeitungsstationen notwendig ist, zu einer statischen Überbestimmtheit führt. Denn die einzelnen Wagen sind entweder durch die angepreßten Nachbarwagen oder durch das vorgespannte Stahlband in ihrer Position fixiert. Sie können also nur unter Wirkung erheblicher Gegenkräfte durch eine äußere Indexiereinheit od. dgl. feinpositioniert werden.

Vorteile der Erfindung

Durch die erfindungsgemäße Steuerung der Wagen gemäß den kennzeichnenden Merkmalen des Hauptanspruches ergibt sich der Vorteil, daß die Wagen ohne gegenseitige Berührung individuell und vor allem stoßfrei transportiert und positioniert werden, wobei die Positionier-

genauigkeit im Prinzip nur noch von der Genauigkeit
der um die Steuerwelle laufenden Steuerkurve abhängt.
Diese ist durch NC-Maschinen mit relativ günstigem
Kostenaufwand außerordentlich genau herstellbar, insbesondere dann, wenn sie gemäß Anspruch 3 als in die
Steuerwelle eingefräste Nut ausgebildet ist. Für den
schrittweisen Vorschubantrieb und für die Kraftübertragung auf die Steuerwellen selbst können relativ einfache und kostengünstige Teile verwendet werden. Weiterhin bietet sich im Gegensatz zu den vorbeschriebenen, bekannten Systemen die Möglichkeit, bei erhöhten
Genauigkeitsanforderungen einzelne Wagen durch eine
Indexiereinheit zusätzlich feinzupositionieren, ohne
daß es dabei zu einem Verspannen dieses Wagens mit dem
Nachbarwagen oder mit seinem Transportband kommt. Schwimmend auf den Laufwagen angeordnete Werkstückträger können ebenfalls entfallen.

Durch die Gestaltung der Steuerkurve gemäß Anspruch 4
ergibt sich ein besonders stoßfreier und geräuscharmer
Lauf bei kurzen Taktzeiten.

Die Merkmale der Ansprüche 6 und 7 bieten den Vorteil,
daß das Werkstück von sechs Seiten für Bearbeitungs-
oder Montagearbeiten zugänglich ist. Auch können durch
die winkelförmige Gestaltung der Laufwagen langschaftige, durch den Werkstückträger hindurchragende Erzeugnisse transportiert werden.

Für den Transport der Wagen in den Umlenkbereichen
zwischen Vorlauf- und Rücklaufstrecke stehen an sich
verschiedene konstruktive Lösungen zur Verfügung. Besonders zweckmäßig ist es aber, daß der Transport in den Umlenkbereichen durch gegenseitigen Schub der einander berührenden Laufwagen erfolgt. Dadurch entfallen zusätzliche Antriebselemente wie Förderbänder od. dgl. sowie die zugehörigen Umlenkräder. Zugleich bleibt der Umlenkbereich frei und steht für den Anbau von Arbeitseinheiten zur Verfügung.

Die gegenseitige Berührung der Laufwagen in den Umlenkbereichen erfolgt am günstigsten mit den Merkmalen gemäß Anspruch 9, so daß man keine zusätzlichen Anlageflächen zwischen den Wagen benötigt.

Ist die im wesentlichen durch die Genauigkeit der Steuerkurve in ihrem radialen Bereich vorgegebene Grundgenauigkeit für die Positionierung der einzelnen Wagen in Einzelfällen nicht ausreichend, so kann auf die Merkmale des Anspruches 10 zurückgegriffen werden. Dadurch wird das Werkstück bzw. der Werkstückträger zusätzlich durch eine äußere Positioniereinheit, beispielsweise einen Stift, der in eine entsprechende Bohrung des Werkstückes eindringt, innerhalb der von der Steuerkurve vorgegebenen Toleranz nachjustiert. Dieses Nachjustieren ist - wie bereits zuvor erwähnt - ohne die Erzeugung einer statischen Überbestimmtheit und ohne die Verwendung schwimmender Werkstückträger möglich, da die einzelnen Laufwagen im Vorlauf und im Rücklauf unter einem gewissen Abstand zueinander geführt sind.

Die Merkmale der Ansprüche 11 und 12 geben trotz kombiniertem Antrieb der beiden Steuerwellen mittels einer zentralen Antriebswelle die Möglichkeit, das Verhältnis von Transportzeit zu Haltezeit (Bearbeitungszeit) durch An- und Abkuppeln der Steuerwellen zu variieren. Dadurch können auch Montage- oder Bearbeitungseinheiten mit separatem Antrieb eingesetzt werden.

Weitere Einzelheiten und Vorteile der Erfindung ergeben sich aus der nachfolgenden Beschreibung eines Ausführungsbeispieles.


Zeichnung


In der Zeichnung zeigt:

> Fig. 1 eine Draufsicht auf einen erfindungsge-
> mäßen Montageautomat ohne angebaute Mon-
> tage- oder Bearbeitungseinheiten;

> Fig. 2 eine Ausschnittvergrößerung aus einem Quer-
> schnitt durch die Führungsbahn und

> Fig. 3 eine Ausschnittvergrößerung des Eingriffs
> zwischen der Steuerwelle und den Laufwagen.


Beschreibung des Ausführungsbeispieles


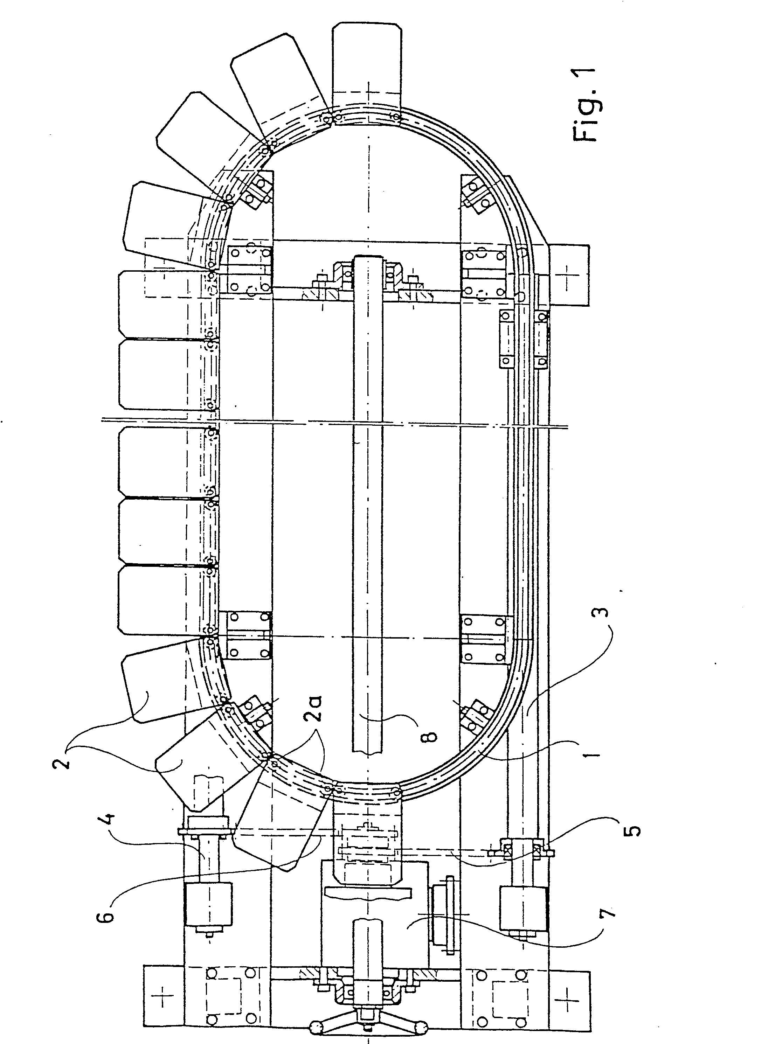

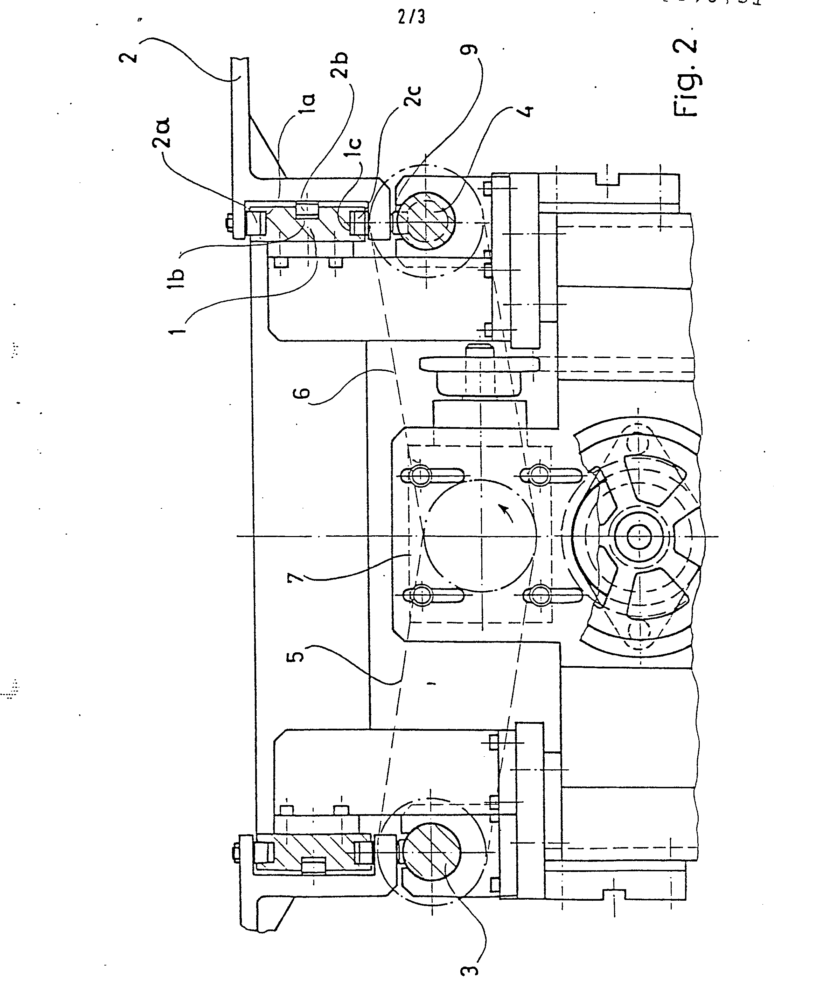

Ein nach dem Baukastenprinzip zusammengebautes Grundgestell weist in seinem oberen Bereich eine horizontal
umlaufende Führungsbahn 1 auf. Der Querschnitt gemäß
Fig. 2 zeigt, daß die Führungsbahn 1 in an sich bekannter Weise mit drei umlaufenden Nuten 1a, 1b und
1c für die entsprechend angeordneten Laufrollen 2a,
2b und 2c der Laufwagen 2 versehen ist. Die Laufrollen
sind an jedem Laufwagen paarweise angeordnet, wobei
zumindest zwei Laufrollenpaare an der äußeren Begrenzung der Laufwagen sitzen und dort teilweise überstehen,
vergl. Fig. 1.

Die Laufwagen haben eine etwa L-förmige Form, wobei
der an der Oberseite nach außen ragende Schenkel entweder selbst als Werkstückträger dient oder den Werkstückträger aufnimmt.

Unterhalb der beiden geraden Bereiche der Führungsbahn 1 verläuft jeweils eine Steuerwelle 3 bzw. 4. Sie
ist in dem nicht näher bezeichneten Grundgestell verdrehbar gelagert und wird jeweils über beispielsweise
eine Kette 5 bzw. 6 von einem gemeinsamen Schrittschaltgetriebe 7 angetrieben. Der Antrieb des Schrittschaltgetriebes 7 erfolgt seinerseits durch eine zentrale
Antriebswelle 8, die gleichmäßig umläuft und zugleich
zur Steuerung der in der Zeichnung nicht dargestellten
Bearbeitungs- oder Montageeinheiten dient.

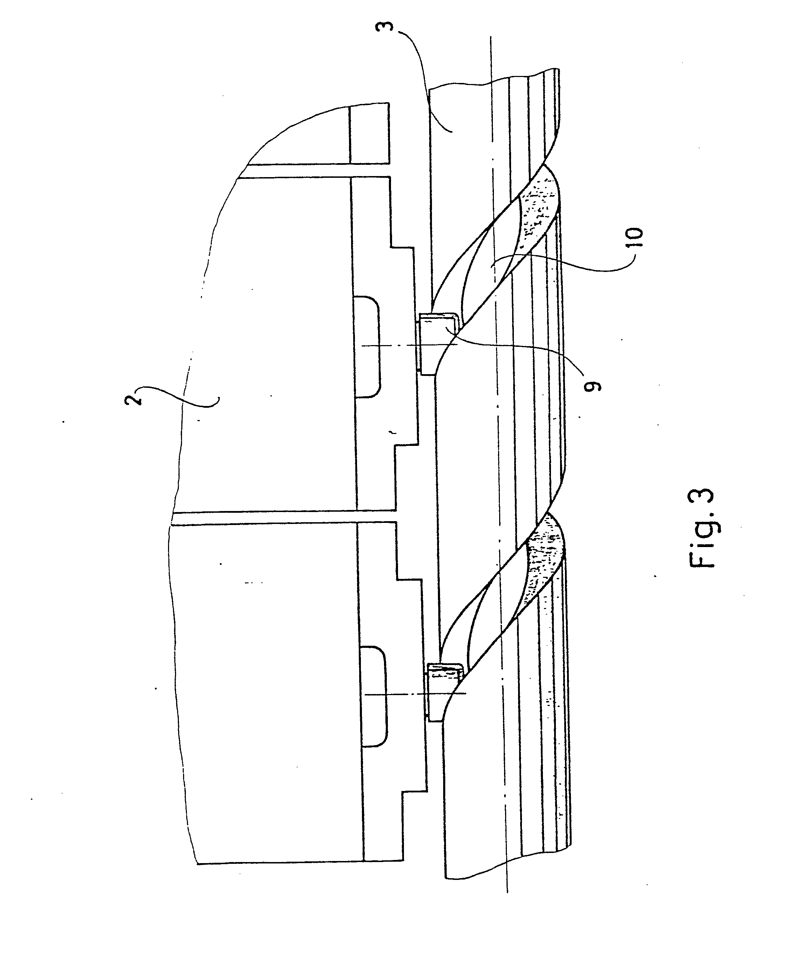

Wie die Fig. 2 und 3 zeigen, weist jeder Laufwagen 2
in seiner unteren Verlängerung einen zylindrischen Führungsstift 9 auf. Dieser Führungsstift kann als Rollkörper ausgebildet sein und ragt radial in eine umlaufende Steuernut 10 der Steuerwelle 3 bzw. 4 hinein.
Die Steuernut hat über einen Umfang von etwa 330° einen
etwa schraubengangförmigen, sinoiden Verlauf, während
sie im restlichen Umfangsbereich exakt radial verläuft.
Zwischen dem radialen und dem schraubengangförmigen
Verlauf sind jeweils allmähliche Übergänge vorgesehen.
Die Steigung der Steuernut ist so bemessen, daß die
radialen Abschnitte einen etwas größeren Abstand voneinander aufweisen, als die Laufwagen 2 breit sind.
Damit ist sichergestellt, daß jeder Laufwagen individuell und mit ausreichendem Sicherheitsabstand zum
Nachbarwagen geführt wird.

Die Wirkungsweise ist folgende: Von der permanent umlaufenden zentralen Antriebswelle 8 werden die beiden Steuerwellen 3 und 4 über das Schrittschaltgetriebe 7
schrittweise um jeweils eine Umdrehung weitergedreht.
Dadurch werden die Laufwagen im Vor- und im Rücklauf
jeweils um eine Laufwagenlänge weitertransportiert.
Die Ruhestellung der Laufwagen ist jeweils durch den
radial verlaufenden Teilbereich der Steuernut 10 definiert.

Beim Übergang von den geraden Vor- bzw. Rücklaufbereichen in die sich anschließenden Umlenkbereiche der
Führungsbahn 1 laufen die Wagen 2 aus der Steuernut 10
heraus. Ihr Transport in den Umlenkbereichen erfolgt
durch den Schub der nachfolgenden Wagen. Damit hierfür
keine zusätzlichen Anschlagflächen zwischen den Wagen
hergestellt werden müssen, sind die Wagen im Bereich
der äußeren Laufrollen etwas schmaler gehalten, so daß
die Anlage benachbarter Wagen über diese Laufrollen
erfolgt.

Um ein ungestörtes Einfädeln der Wagen aus dem Umlenkbereich in den geraden Bereich mit der Führung durch
die Steuerwelle zu gewährleisten, ist die Länge des
Umlenkbereiches auf die Breite der Laufwagen abgestimmt
und außerdem sind die beiden Steuerwellen beim Einbau
in die Montagemaschine auf eine bestimmte Zuordnung
eingestellt worden.

Über die zentrale Antriebswelle 8 können alle Bearbeitungs- bzw. Montageeinheiten, beispielsweise über Kurvenscheiben und Hebel oder über Ketten- oder Zahnriemen,
direkt angetrieben werden. Für Einheiten mit eigenem
Antrieb gibt die Antriebswelle über Nocken oder Signalglieder, die verstellbar auf ihr angeordnet sind, das
Start- bzw. das Rücklaufsignal.

Schließlich kann an geeigneter Stelle der Kraftfluß
zwischen der zentralen Antriebswelle 8 und den beiden
Steuerwellen 3 und 4 durch eine Schaltkupplung unterbrochen werden, um das Verhältnis von Transportzeit
und Haltezeit zu variieren.

5080

0010131

Fig. 1

Fig. 2

Fig. 3

**Europäisches Patentamt**

# EUROPÄISCHER RECHERCHENBERICHT

EP 79 103 012.5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 2 789 683 (A.R. STAHL)<br>* Spalte 1, Zeile 15 bis Spalte 5, Zeile 35 *<br>-- | 1,3,<br>5,8 |
| | CH - A - 410 782 (SCHWEIZERISCHE INDUSTRIE-GESELLSCHAFT)<br>* Seite 1, Zeile 46 bis Seite 2, Zeile 19 *<br>-- | 1,3,5,<br>6,11 |
| | DE - B - 1 259 779 (SCHWEIZERISCHE INDUSTRIE-GESELLSCHAFT)<br>* Spalte 2, Zeilen 30 bis 49 *<br>-- | 1,6,<br>11 |
| | FR - A1 - 2 370 658 (H.U. BOGATZKI)<br>* Seite 7, Zeilen 5 bis 7; Fig. 1 und 2 *<br>-- | 1,6,<br>11 |
| | US - A - 2 139 403 (L.C. COLE)<br>* Seite 4, Zeilen 19 bis 28 *<br>-- | 10 |
| D | DE -B - 2 031 851 (G. BRÜCKNER)<br>* ganzes Dokument *<br>-- | 1 |
| A | GB - A - 1 315 016 (TOSHIBA SEIKI K.K.)<br>-- | |
| A | US - A - 3 029 652 (J.H. BREMS)<br>----- | |

### KLASSIFIKATION DER ANMELDUNG (Int.Cl.3)

B 65 G   35/08
B 23 Q   7/14
B 23 P   19/00

### RECHERCHIERTE SACHGEBIETE (Int. CL.3)

B 23 P   19/00
B 23 Q   7/00
B 23 Q   39/00
B 23 Q   41/00
B 65 G   17/00
B 65 G   23/00
B 65 G   35/00
B 65 G   37/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 22-01-1980 | SIMON |

EPA form 1503.1   06.78